# EUROPÄISCHE PATENTSCHRIFT

(11) **EP 0 452 251 B1**
(45) Veröffentlichungstag und Bekanntmachung des Hinweises auf die Patenterteilung: **29.09.1993**
(21) Anmeldenummer: 91810146.0
(22) Anmeldetag: 05.03.1991
(51) Int. Cl.: F24F 5/00, E21F 3/00

(54) **Antriebs- und Versorgungseinheit für Sprüh- oder Oberflächenkühler**
Driving- and supply-unit for spray- or surface-cooler
Unité d'entraînement et d'alimentation pour refroidisseur à pulvérisation ou à surface

(30) Priorität: 04.04.1990 CH 1134/90
(43) Veröffentlichungstag der Anmeldung: 16.10.1991
(73) Patentinhaber: SULZER INTERNATIONAL AG, CH-8401 Winterthur (CH)
(72) Erfinder: Hueber, Joseph, CH-8627 Grüningen (CH)
(74) Vertreter: Hammer, Bruno, Dr.

(56) Entgegenhaltungen:
- DE-C- 289 340
- US-A- 2 217 130

## Beschreibung

Die Erfindung betrifft eine Antriebs- und Versorgungseinheit für Sprüh- oder Oberflächenkühler, bestehend aus einem Luftkanal, in dem ein Lüfter eingebaut ist, aus einer Kühlwasserzuführung und aus einer Steuerung mit Armaturen, um den Kühlwasserstrom zu regeln und bestehend aus einer Impulsturbine mit Getriebe, welche mit Druckwasser angetrieben ist und den Antrieb für den Lüfter bildet. Die US-A-2.217.130 zeigt einen Luftbefeuchter mit einem zugeschalteten Heiz- oder Kühlregister für in Kühlhäusern gelagerte Citrusfrüchte. Die eigentliche Kühlung erfolgt durch das separate Register. Zur Luftbefeuchtung zirkuliert Wasser in einem Kreislauf, indem das Wasser mit einer Pumpe aus einem Sumpf auf ein Dreiwegventil gegeben wird, von dem ein erster Teilstrom einen Ventilator über eine Impulsturbine antreibt, während ein zweiter Teilstrom den Düsen eines Luftbefeuchters zugeführt wird. Beide Teilströme laufen in den Sumpf zurück. Solange die Luft im Kühlhaus ungesättigt ist, findet aufgrund des eingespritzten Wassers eine geringe Verdampfung und eine entsprechend beschränkte Kühlung statt. Bei gesättigter Kühlhausluft findet keine Verdampfung mehr statt und Luft und Wasser gleichen ihre Temperaturen aneinander an. Zur weiteren Kühlung muss das separate Register mit einer kälteren fremden Kühlflüssigkeit versorgt werden.

Sprühkühler und Oberflächenkühler werden in grosser Zahl im Bergbau verwendet, um auf tief liegenden Sohlen Kühlluft zu erzeugen. In einem Artikel "Optimierung der Kälteübertragung beim Klimatisieren tiefer Steinkohlenbergwerke" im Januar 1987 von Prof. Dr.-Ing. E.-U. Reuther am Institut für Bergbaukunde I der Rheinisch-Westfälichen Technischen Hochschule Aachen für die Deutsche Forschungsgemeinschaft zum DFG-Aktenzeichen Re 194/15-1, werden die Einsatzbedingungen für Sprüh- und Oberflächenkühler im Steinkohlenbergbau beschrieben und einander gegenübergestellt. Ein weiterer Artikel "Optimisation of spray coolers for cooling deep coal mines" mit den Autoren H.E.Reuther, H. Uhlig, G. Hagen wurde vorgelegt am: Fourth International Mine Ventilation Congress, published by the Australasian Institute of Mining and Metallurgy in Melbourne, printed by Brown prior Anderson Pty Ltd, 5 Evans Street, Burwood, Victoria, Australia 3125, beschreibt auf Seite 453 MESH COOLER für die Minen von Südafrika und zeigt standardisierte Sprühkühler, die an einen Warmluftstrom zur Kühlung angeschlossen werden können. In grösserer Teufe lohnt es sich nicht mehr, gekühlte Luft von der Erdoberfläche als Kühlmedium in die warmen Abbaufelder zu bringen, da die Erwärmung unterwegs zu gross ist. In solchen Fällen wird kaltes Wasser als Kühlmedium vorgesehen, welches untertag gebracht wird und zu Kühlern gelangt, durch welche die Bewetterung einer Strecke geführt ist. Dank seiner hohen spezifischen Wärme kommt das Kühlwasser bei immer noch niedrigen Temperaturen zu den Kühlern, die zum Erzielen eines guten Wärmeübergangs und einer guten Selbstreinigung meist als Sprühkühler ausgeführt sind. Bei tief liegenden Sohlen wird am meisten Kühlluft vor Ort benötigt, um Arbeitsmaschinen, Umgebung und Bedienungspersonal kühl zu halten. Die Umwälzung erfolgt mit grossen Lüftern, die elektrisch angetrieben werden, und deren Antriebsmotoren Wärme abgeben. Dadurch besteht die Abhängigkeit von einem elektrischen Versorgungssystem, das bei Starkstrom in strengen Grenzen vorgeschrieben ist und das einen erheblichen Anteil der Investitions- und Betriebskosten verursacht.

Hier schafft die Erfindung Abhilfe. Sie löst die Aufgabe, Umwälzung und Kühlung der Luft auf mehreren, tieferen Sohlen mit nur einem Energieträger, nämlich gekühltem Oberflächenwasser, vorzunehmen. Diese Aufgabe wird mit den Kennzeichen vom unabhängigen Anspruch 1 gelöst. Die Vorteile der Erfindung sind darin zu sehen, dass keine elektrische Energie vor Ort notwendig ist, um die Wetter zu kühlen und umzuwälzen. Die Kühleinrichtungen können im Rahmen von Hochdruckwasseranschlüssen und flexiblen Hochdruckleitungen mobil gehalten werden. Mechanisch geschultes Personal genügt für die Aufrechterhaltung und Wartung vom Kühlbetrieb.

Die abhängigen Ansprüche 2 bis 5 beziehen sich auf vorteilhafte Weiterbildungen der Erfindung.

Im folgenden wird die Erfindung anhand von Ausführungsbeispielen beschrieben. Es zeigen:
- Fig. 1: Die schematische Skizze eines fahrbaren Sprühkühlers, dem eine erfindungsgemässe Antriebsund Versorungseinheit vorgeschaltet ist;
- Fig. 2: einen schematischen Längsschnitt durch den Antriebsteil für die Luftumwälzung mit Axialturbine, Reduktionsgetriebe und Lüfter;
- Fig. 3: das Hydraulikschema einer Antriebs- und Versorgungseinheit mit einer Axialturbine und nachgeschalteter Druckrückgewinnung für einen Sprühkühler und einen Nebenantrieb für Zusatzkühlwasser aus einem Reservoir;
- Fig. 4: ein Hydraulikschema gemäss Fig. 3 mit dem Unterschied, dass Zusatzkühlwasser unabhängig von der Axialturbine durch ein zweites Netz zugeführt wird;
- Fig. 5: das Hydraulikschema einer Antriebs- und Versorgungseinheit mit einer Axialturbine und nachgeschalteter Druckrückgewinnung für einen Sprühkühler sowie eine Zusatzkühlwasserversorgung aus einer zweiten Axialturbine mit nachgeschalteter Druckrückgewinnung;

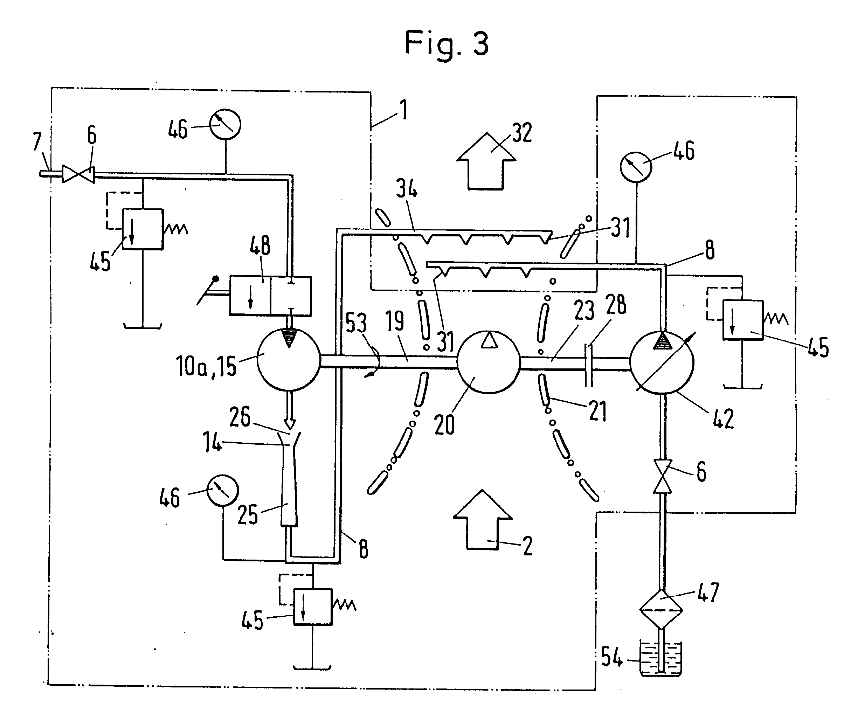

In den Fig. 3 bis 5 sind die Hydrauliksymbole für Absperrventile mit 6, für einstellbare Druckbegrenzungsventile mit 45, für Manometer mit 46, für handgesteuerte Betätigungsventile mit 48, für Rückschlagventile mit 49 und für die Drehrichtung von Wellen mit 53 bezeichnet.

In den Figuren sind Antriebs- und Versorgungseinheiten 1 zu Sprüh- oder Oberflächenkühlern 30 gezeigt, wie sie z.B. im Bergbau unter Tage verwendet werden. Kühlwasserleitungen 8 führen zu Sprühkühlern 30 oder zu Oberflächenkühlern, die im Warmluftstrom 2 eines Lüfters 20 oder Gebläses liegen und die den warmen Wettern Wärme entziehen, um sie als Kaltluft 32 abzugeben. Bei Sprühkühlern erfolgt die Wärmeabgabe an die von Sprühdüsen 31 dem Luftstrom zeitweise beigemischten Wassertröpfchen, die je nach Luftfeuchtigkeit ausserdem geringfügig verdunsten. Bei Oberflächenkühlern findet der Wärmeübergang vom Wetterstrom durch Trennwände zum Kühlwasser statt. Eine Steuerung 9 dosiert den Kühlwasserstrom, wobei im Fall des Sprühkühlers Druckdifferenzen von etwa 1,5 bar an den Sprühdüsen 31 zu überwinden sind.

Erfindungsgemäss wird die Antriebs- und Versorgungseinheit 1 von gekühltem Hochdruckwasser aus einer Hochdruckleitung 7 gespeist, die eine Axialturbine 10a antreibt. Die Turbinendrehung wird mit einem Reduktionsgetriebe 15 untersetzt, um einen Lüfter 20 und wahlweise über eine Hilfswelle 23 mit Kupplung 28 weitere Aggregate anzutreiben. Am Austritt der Axialturbine 10a befindet sich eine Sammelöffnung 26, die die aus einer Hochdruckdüse 12 austretende Antriebsflüssigkeit 27 hinter dem Turbinenrad 11 sammelt und über eine Zuleitung 8 der Kühlwasserleitung 34 eines Sprühkühlers 30 zuführt.

Bei der Axialturbine 10a kann die kinetische Restenergie des Antriebsstrahls 27 hinter dem Turbinenrad 11 mit einer an einer nierenförmige Sammelöffnung 26 anschliessenden, sich schlitzförmig verengenden Auffangdüse 14 und einer Fortsetzung in Form eines Diffusors 25 als Druckenergie zurückgewonnen werden. Dieser zurückgewonnene Druck reicht aus, um das für die Sprühdüsen 31 notwendige Druckgefälle zu erzeugen.

Für die Auslegung der Axialturbine 10a einer Versorgungseinheit 1, spielt die Abstimmung der Wassermengen eine grosse Rolle, da bei einem bestimmten Druckgefälle über die Turbine die für die Antriebsleistung notwendige Wassermenge nur in wenigen Fällen mit der für die Kühlleistung notwendigen Wassermenge zusammenfallen wird. So zeigt der Vergleich bei verschiedenen Druckgefällen und einer Wassererwärmung von 15° C im Sprühkühler und gleichen Daten für die durchgesetzte Luft, dass bei einem Druckgefälle von 400 m eine Wassermenge für den Antrieb des Ventilators notwendig ist, die der Wassermenge für den Sprühkühler entspricht, während bei einem Druckgefälle von 2000 m nur noch ein Fünftel der für den Sprühkühler notwendigen Wassermenge für den Antrieb des Lüfters verwendet werden kann.

Als Folge dieser Abhängigkeit wird für Bergwerke bei grösseren Sohlenteufen vorgeschlagen, entweder das geodätische Gefälle in Kaskaden für turbinengetriebene Arbeitsmaschinen zu nutzen und um dem Beispiel gerecht zu werden, die letzte Stufe mit 400 m Druckgefälle zum Betreiben von Antriebs- und Versorgungseinheiten 1 für Sprüh- oder Oberflächenkühler zu verwenden oder dem Kühler zusätzlich Kühl- oder Brauchwasser, das bei niedrigen Drücken auf der Sohle anfällt, einzuspeisen.

In Fig. 3 wird dieses zusätzliche Kühlwasser aus einem Reservoir 54 über einen Ansaugfilter 47 mit einer regelbaren Pumpe 42 gefördert, die über eine Hilfswelle 23 mit Kupplung 28 von der Axialturbine 10a der Antriebs- und Versorgungseinheit zusätzlich angetrieben wird.

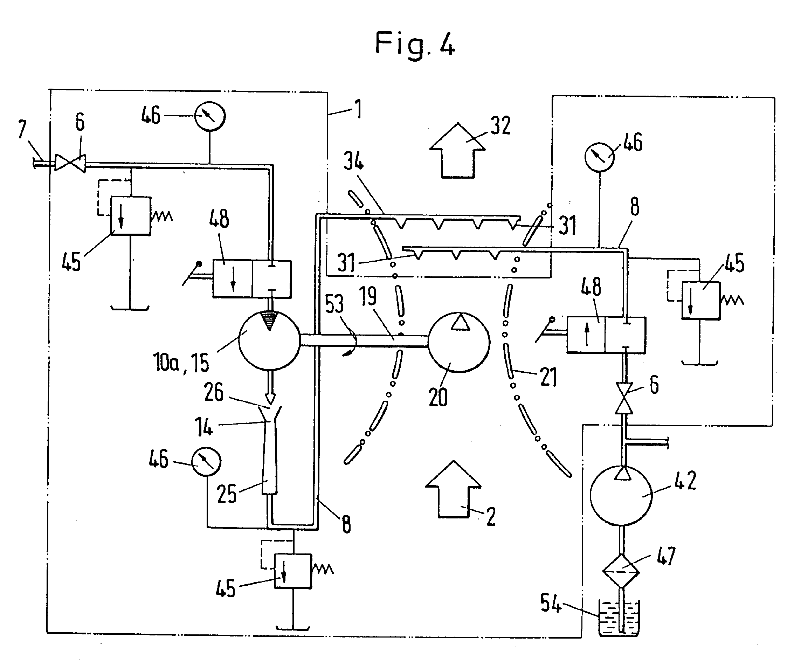

In Fig. 4 wird das zusätzliche Kühlwasser durch ein fremdes Niederdrucknetz eingespeist, dessen Reservoir 54 auch auf einer höheren Sohle liegen kann, um die Pumpe 42 einzusparen.

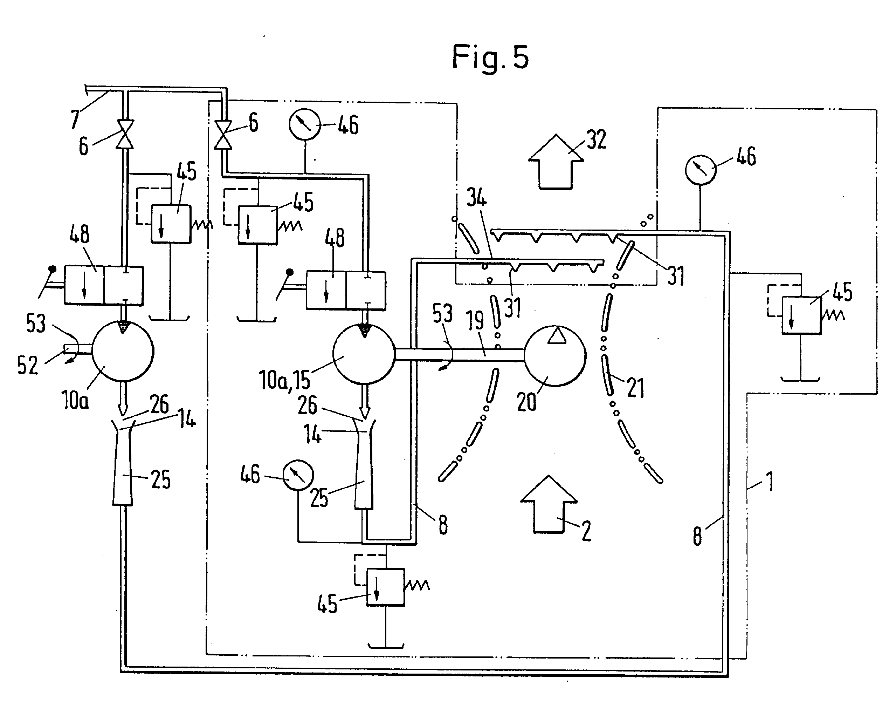

In Fig. 5 zweigt von der Hochdruckwasserleitung 7 auf der Sohle der Antriebs- und Versorgungseinheit 1 eine Leitung für den Antrieb einer Arbeitsmaschine ab, welche über Welle 52 von einer Axialturbine 10a angetrieben wird. Wie bei der Axialturbine 10a der Antriebs- und Versorgungseinheit 1 wird auch bei dieser Axialturbine 10a der vom Turbinenrad 11 abgelenkte Antriebsstrahl 27 mit einer nierenförmigen Sammelöffnung 26 eingefangen und in einer sich schlitzförmig verengenden Auffangdüse 14 konzentriert. Die kinetische Restenergie des Strahls im Grund der Düse 14 wird in einem an die Düse 14 anschliessenden Diffusor 25 in Form eines Druckanstiegs teilweise zurückgewonnen. Das bis zu diesem Punkt nur unwesentlich erwärmte und unter Druck stehende Kühlwasser wird ebenfalls über eine Kühlwasserleitung 8 dem Sprühkühler zugeführt. Je nach Länge der Zuleitung 8 ist ein Zwischengefäss mit Gasausschleusung vorzusehen, wenn sich die in der Auffangdüse 14 mitgerissenen Luftanteile störend auf die Funktion des Kühlers auswirken.

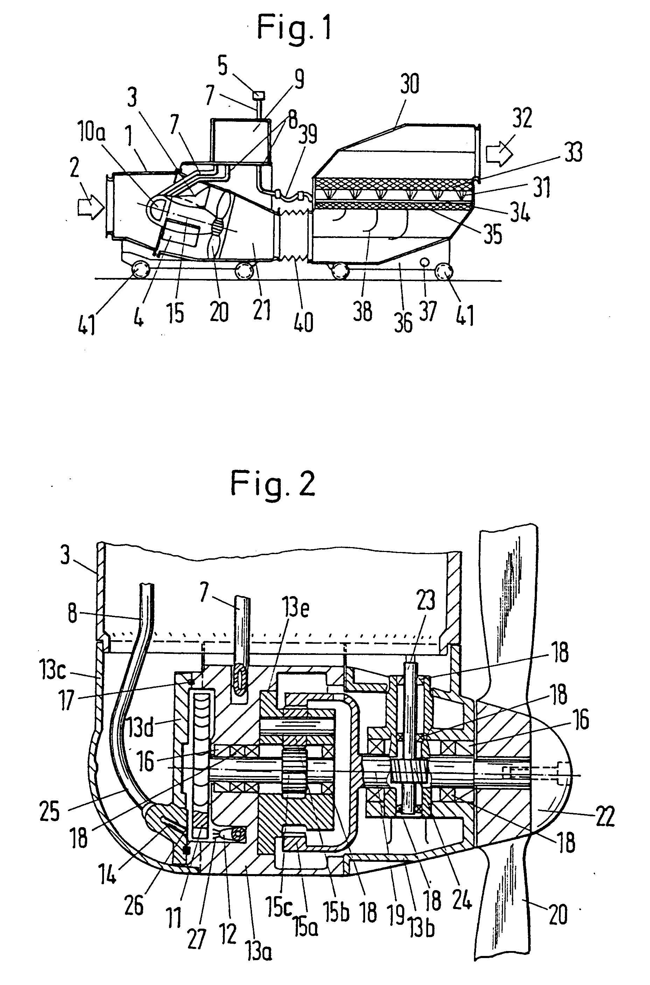

In Fig. 1 und 2 ist der mechanische Aufbau einer mobilen Antriebs- und Versorgungseinheit 1 gezeigt. Auf einem Fahrgestell 41 sind jeweils ein Sprühkühler 30 und eine Antriebs- und Versorgungseinheit 1 aufgebaut. Der Sprühkühler wird über einen Luftkanal 21 und ein flexibles Rohr 40 mit Luft angespeist, die über Umlenkbleche 38 gegen ein Drahtgitter 35 gelenkt wird, an dessen Rückseite Kühlwasserleitungen 34 mit Sprühdüsen 31 angebracht sind, die dem vertikal nach oben gerichteten Luftstrom Wassertröpfchen beimischen, um unter Schwerkraft eine möglichst lange Verweilzeit im Wetter für den Wärmeaustausch zu erreichen. Ein nachgeschaltetes zweites Drahtgitter 33 wirkt als Tropfenabscheider. Die Flüssigkeit sammelt sich in einem Sumpf 36 und wird über einen Wasseraustritt 37 weggeführt. Die Antriebs- und Versorgungseinheit 1 ist mit einer Hochdruckkupplung 5 an eine flexible Hochdruckwasserleitung 7 anschliessbar. In einer Steuerung 9 sind Anzeigeinstrumente, Steuer- und Regeleinrichtungen sowie Absperrorgane für die Hydraulik untergebracht. Die Hochdruckdüse 12 der Axialturbine 10a wird nach der Steuerung 9 von der fortgesetzten Hochdruckwasserleitung 7 versorgt. Der austretende Antriebsstrahl 27 wird im Turbinenrad 11 umgelenkt und anschliessend über Sammelöffnung 26, Auffangdüse 14 und Diffusor 25 der Kühlwasserleitung 8 zugeführt und über einen Verbindungsschlauch 39 als Kühlwasser an die Kühlwasserleitung 34 im Sprühkühler 30 abgegeben. Axialturbine, Reduktionsgetriebe und Ventilator sind über die Gehäuse 13a, b, c, d, in einer Baugruppe zusammengefasst, die sich über ein Hohlprofil 3 und Stützen 4 im Luftkanal 21 abstützt. Die Verbindungsleitungen zur Steuerung 9 sind durch das Hohlprofil 3 geführt. Statische Weichdichtungen 17 und dynamische Weichdichtungen 16 verhindern den Austritt von Wasser aus dem Turbinengehäuse. Das Turbinengehäuse besitzt eine Belüftungsöffnung zur Atmosphäre, damit durch das Mitreissen von Luft in der Auffangdüse 14 kein Unterdruck entsteht. Die Beaufschlagungszone für das Turbinenrad 11 ist so orientiert, dass die Sammelöffnung 26 in der Nähe des tiefsten Gehäusepunktes liegt, um Restwasser mit abzusaugen. Turbinenwelle, Ventilatorwelle 19 und Hilfswelle 23 sind über Lager 18 im Gehäuse abgestützt. Das Reduktionsgetriebe 15 mit Zahnrädern 15a, 15b, 15c ist als Planetengetriebe ausgeführt, wobei das Gehäuse 13e den Planetenträger bildet. Das Hohlrad 15a ist als Glocke ausgeführt, die mit der Ventilatorwelle 19 verbunden ist, auf der der Ventilator 20 mit einem Abschluss-Stück 22 gehalten ist. Quer zur Ventilatorwelle 19 liegt eine Hilfswelle mit Schneckenrad 24, das in eine zur Schnecke ausgebildeten Partie der Ventilatorwelle 19 eingreift.

Im Sinne einer Gesamtplanung für die Energieträger könnte es bei geringen geodätischen Gefällen bei Sohlen geringer Teufe passieren, dass die vom Kühler her notwendige Wassermenge kleiner ist als die von der theoretischen Turbinenauslegung her notwendige Wassermenge. In einem solchen Fall ist es sicher sinnvoll, die Arbeitsturbinen auf ein grösseres Mindestgefälle zu standardisieren und an der Oberfläche Druckerhöhungspumpen einzusetzen.

## Patentansprüche

1. Antriebs-und Versorgungseinheit für Sprüh- oder Oberflächenkühler, bestehend aus einem Luftkanal (21), in dem ein Lüfter (20) eingebaut ist, aus einer Kühlwasserzuführung (8) und aus einer Steuerung (9) mit Armaturen um den Kühlwasserstrom zu regeln, und bestehend aus einer Impulsturbine (10) mit Getriebe (15), welche von Druckkühlwasser angetrieben ist und den Antrieb für den Lüfter (20) bildet, dadurch gekennzeichnet, dass die Impulsturbine (10) eine Axialturbine (10a) ist und dass am Wasseraustritt der Impulsturbine (10) eine Sammelöffnung (26) installiert ist, die die aus einer Hochdruckdüse (12) austretende Antriebsflüssigkeit (27) hinter dem Turbinenrad (11) sammelt, wobei sie als Auffangdüse (14) mit nachfolgendem Diffusor (25) ausgebildet ist, welcher einen eingefangenen Flüssigkeitsstrahl in seiner Geschwindigkeit verzögert und mit rückgewonnenem Druck der Kühlwasserleitung (34) eines Sprühkühlers (30) oder eines Oberflächenkühlers zuführt.

2. Antriebs- und Versorgungseinheit nach Anspruch 1, dadurch gekennzeichnet, dass die Sammelöffnung (26), die Auffangdüse (14) und der Austritt des Treibstrahls aus dem Tubinenrad (11) in der Nähe des tiefsten Gehäusepunktes angeordnet sind mit dem Zweck, durch die Injektorwirkung von Strahl und Auffangdüse (14) Restwasser aus dem Gehäuse (13a,13c) abzusaugen.

3. Antriebs- und Versorgungseinheit nach Anspruch 1 oder 2, dadurch gekennzeichnet, dass von einer Hochdruckkühlwasserleitung (7) eine Leitung mit einer Hochdruckdüse (12) abzweigt, die eine weitere Impulsturbine (10) antreibt, deren Arbeit an andere Verbraucher abgegeben wird, während die aus der Impulsturbine (10) austretende Flüssigkeit als Kühlflüssigkeit einem Teil der Sprühdüsen (31) des Sprühkühlers (30) oder dem Oberflächenkühler zuführbar ist.

4. Antriebs- und Versorgungseinheit nach einem der Ansprüche 1 bis 3, dadurch gekennzeichnet, dass das Getriebe (15) einen zweiten Abtrieb mit Hilfswelle (23) sowie Kupplung (28) aufweist, die eine Flüssigkeitspumpe (42) zum Fördern von Kühlflüssigkeit, welche nicht einer Kühlwasserzuführung (8) zwischen Axialturbine (10a) und Sprüh- oder Oberflächenkühler entnommen ist, antreibt.

5. Antriebs- und Versorgungseinheit nach einem der Ansprüche 1 bis 4, dadurch gekennzeichnet, dass ihr Einsatz unter Tage erfolgt.

## Claims

1. A driving and supply unit for spray or surface coolers,
consisting of an air channel (21) into which a fan (20) is built, a cooling water supply (8) and a control (9) with fittings for regulating the flow of cooling water, and consisting of an impulse turbine (10) with a gear (15), which is driven by cooling water under pressure and forms the drive for the fan (20),
characterized in that the impulse turbine (10) is an axial turbine (10a) and that at the water outlet from the impulse turbine (10) a collector opening (26) is installed, which collects beyond the turbine wheel (11) the driving liquid (27) leaving a high-pressure nozzle (12), the said collector opening being made as a collector nozzle (14) with a diffusor (25) following it, which retards the velocity of a captured jet of liquid and feeds it with recovered pressure to the cooling water main (34) of a spray cooler (30) or surface cooler.

2. A driving and supply unit as in Claim 1,
characterized in that the collector opening (26), the collector nozzle (14) and the outlet of the driving jet from the turbine wheel (11) are arranged near the lowest point of the housing for the purpose of sucking away any remaining water from the housing (13a, 13c) through the injector action of the jet and the collector nozzle (14).

3. A driving and supply unit as in Claim 1 or 2,
characterized in that from a high-pressure cooling water main (7) a pipe branches with a high-pressure nozzle (12) which drives a further impulse turbine (10) the work from which is delivered to another load, whilst the liquid leaving the impulse turbine (10) may be fed as cooling liquid to some of the spray nozzles (31) of the spray cooler (30) or to the surface cooler.

4. A driving and supply unit
as in one of the Claims 1 to 3, characterized in that the gear (15) exhibits a second power take-off with an auxiliary shaft (23) together with a coupling (28) which drives a hydraulic pump (42) for delivering cooling liquid which is not taken off a cooling water supply (8) between the axial turbine (10a) and the spray or surface cooler.

5. A driving and supply unit as in one of the Claims 1 to 4, characterized in that use is made of it underground.

## Revendications

1. Unité d'entraînement et d'alimentation pour refroidisseurs à pulvérisation ou à surface, composée d'une gaine de ventilation (21), dans laquelle est intégrée un aérateur (20), d'une amenée d'eau de refroidissement (8) et d'une commande (9) avec ses instruments, afin de régler le courant de l'eau de refroidissement, et composée d'une turbine à impulsions (10) avec engrenage (15), actionnée par de l'eau de refroidissement pressurisée et qui forme l'entraînement de l'aérateur (20), caractérisée en ce que la turbine à impulsions (10) est une turbine axiale (10a) et qu'à la sortie de l'eau de la turbine à impulsions (10) est installé un orifice collecteur (26), qui collecte derrière la roue de turbine (11) le liquide de propulsion (27) sortant d'une buse à haute pression (12), et qui forme une buse de réception (14) avec diffuseur (25), qui ralentit la vitesse d'un jet de liquide capté et l'amène avec une pression regagnée à la conduite d'eau de refroidissement (34) d' un refroidisseur à pulvérisation (30) ou d'un refroidisseur à surface.

2. Unité d'entraînement et d'alimentation suivant la revendication 1, caractérisée en ce que l'orifice collecteur (26), la buse de réception (14) et la sortie du jet de propulsion de la roue de turbine (11) sont placés à proximité du point le plus bas du boîtier, ayant pour but d'aspirer par l'effet d'injection du jet et de la buse de réception (14) l'eau résiduelle du boîtier (13a, 13c).

3. Unité d'entraînement et d'alimentation suivant la revendication 1 ou 2, caractérisée en ce qu'une conduite avec une buse à haute pression (12) se branche sur une conduite d'eau de refroidissement à haute pression (7) et actionne une turbine à impulsions supplémentaire (10), dont le travail est fourni à d'autres consommateurs, tandis que le liquide sortant de la turbine à impulsions (10) sous forme de liquide réfrigérant peut être amené vers une partie des tuyères de pulvérisation (31) du refroidisseur à pulvérisation (30) ou vers le refroidisseur à surface.

4. Unité d'entraînement et d'alimentation suivant l'une des revendications 1 à 3, caractérisée en ce que l'engrenage (15) dispose d'une deuxième prise de force comportant un arbre intermédiaire (23) ainsi qu'un dispositif d'accouplement (28) qui actionne une pompe de liquide (42) pour l'extraction du liquide réfrigérant, qui ne provient pas d'une amenée d'eau de refroidissement (8) entre la turbine axiale (10a) et le refroidisseur à pulvérisation ou à surface.

5. Unité d'entraînement et d'alimentation suivant l'une des revendications 1 à 4, caractérisée en ce que son utilisation à lieu sous terre.
